# EUROPÄISCHE PATENTSCHRIFT

(11) **EP 4 064 242 B1**
(45) Veröffentlichungstag und Bekanntmachung des Hinweises auf die Patenterteilung: **29.05.2024**
(21) Anmeldenummer: 22160948.0
(22) Anmeldetag: 09.03.2022
(51) Int. Cl.: G08G 1/0967, G08G 1/0968, G08G 1/16, H04W 4/44

(54) **VERFAHREN ZUR BEHANDLUNG VON VERKEHRSSITUATIONEN MIT EINGESCHRÄNKTER DURCHFAHRTSGEOMETRIE UND FAHRZEUG**
METHOD FOR THE TREATMENT OF TRAFFIC SITUATIONS WITH LIMITED GAP GEOMETRY AND VEHICLE
PROCÉDÉ DE TRAITEMENT DES SITUATIONS DE CIRCULATION À GÉOMÉTRIE DE PASSAGE RESTREINTE ET VÉHICULE

(30) Priorität: 22.03.2021 DE 102021202766
(43) Veröffentlichungstag der Anmeldung: 28.09.2022
(73) Patentinhaber: VOLKSWAGEN AG, 38440 Wolfsburg (DE)
(72) Erfinder: Voltmer, Jörg, 30559 Hannover (DE); Hoppmann, Hendrik, 38110 Braunschweig (DE); Köstermann, Janis, 10557 Berlin (DE)
(74) Vertreter: 2SPL Patentanwälte PartG mbB

(56) Entgegenhaltungen:
- DE-A1-102016 202 361
- DE-A1-102018 206 667

## Beschreibung

Die Erfindung betrifft ein Verfahren zur Behandlung von Verkehrssituationen mit eingeschränkter Durchfahrtsgeometrie. Ferner betrifft die Erfindung ein Fahrzeug, das dazu ausgebildet ist, zumindest einen Teil des erfindungsgemäßen Verfahrens durchzuführen.

Im Straßenverkehr ist oftmals die Durchfahrt nur mit Einschränkungen hinsichtlich der Fahrzeuggeometrie möglich. Bei einer Fahrt durch Tunnel, enge Straßen oder auch Parkhäuser ist eine Durchfahrtshöhe oder -breite oft begrenzt. Heute weisen zumeist Schilder auf diese Einschränkungen hin. Diese sind jedoch meist erst kurz vor dem Hindernis angebracht und können außerdem übersehen werden oder verdeckt sein. In einer Verkehrssituation ist so oft eine sekundenschnelle Einschätzung des Fahrers erforderlich, ob die Maße seines Fahrzeugs die Durchfahrt erlauben oder nicht. Verfahren zum Erkennen von eingeschränkten Durchfahrtsgeometrien und Vergleichen mit Fahrzeugabmessungen sind aus DE 10 2014 221 895 A1, DE 10 2016 202 361 A1 und DE 10 2018 206 667 A1 bekannt.

Der Fahrer kennt jedoch nicht unbedingt auf die Schnelle die relevanten Abmessungen seines Fahrzeugs. Fahrer von gemieteten oder geliehenen Fahrzeugen und Fahrer, die Car-Sharing verwenden, verursachen oft Unfälle aufgrund einer falschen Abschätzung der Maße. Doch selbst für Fahrzeugbesitzer sind die Abmessungen, die von vielen Faktoren abhängen und veränderbar sind, oft nicht einfach einzuschätzen.

Die Höhe eines Fahrzeugs ist variabel, etwa durch Dach- oder Heckaufbauten oder einstellbare Fahrwerke. Die Breite wird gemäß Fahrzeugpapieren ohne Außenspiegel angegeben. Die reale Fahrzeugbreite mit Außenspiegeln ist deshalb schwer zu schätzen. Die Breite variiert dabei je nach Position der Spiegel, die sich in einem aus- oder eingeklappten Zustand befinden können, oder wenn beispielweise zusätzliche Anhängerspiegel angebracht wurden. Zudem können Anhänger die Maße eines Fahrzeugs erheblich beeinflussen. Ein Verfahren zum Ermitteln aktueller Fahrzeugabmessungen ist aus der DE 10 2019 205 166 A1 bekannt.

Der Erfindung liegt nun die Aufgabe zugrunde, den Stand der Technik zu bereichern und die sich aus diesem ergebenden Nachteile zu überwinden oder zumindest zu verringern und ein verbessertes Verfahren zur Behandlung von Verkehrssituationen mit eingeschränkter Durchfahrtsgeometrie bereitzustellen.

Ein erster Aspekt der Erfindung betrifft ein Verfahren eines Fahrzeugs zur Umfelderfassung in Verkehrssituationen mit eingeschränkter Durchfahrtsgeometrie. Ein Fahrzeug ist im Sinne dieser Offenbarung bevorzugt ein Personen- oder Lastkraftwagen mit Verbrennungs-, Elektro- oder Hybridmotor. Eine eingeschränkte Durchfahrtsgeometrie ist im Sinne dieser Offenbarung bevorzugt eine bauliche oder natürliche Beschaffenheit in einem Umfeld des Fahrzeugs, die eine Durchfahrt nur für Fahrzeuge mit bestimmten Abmessungen ermöglicht. Eine eingeschränkte Durchfahrtsgeometrie ist beispielweise ein Tunnel, eine Brücke über einer Fahrbahn, eine Unterführung oder eine Einfahrt in einen Innenhof oder ein Parkhaus.

In einem ersten Schritt des Verfahrens wird ein Sensorwert zu einer Fahrzeugumgebung erfasst. Der Sensorwert wird mittels zumindest eines Sensors erfasst, der dazu ausgebildet ist, die Umgebung des Fahrzeugs betreffende Sensorsignale zu erfassen. Der zumindest eine Sensor ist bevorzugt eine Kamera, ein Lidar-Sensor, ein Radar-Sensor, ein Sonar, ein Laser und/oder ein Ultraschallsensor.

In einem weiteren Verfahrensschritt folgt ferner ein Erkennen einer eingeschränkten Durchfahrtsgeometrie anhand des zumindest einen Sensorwertes. Bevorzugt wird anhand des zumindest einen Sensorwertes eine Abstandsmessung durchgeführt, um eine eingeschränkte Durchfahrtsgeometrie zu erkennen. Ferner bevorzugt wird eine eingeschränkte Durchfahrtsgeometrie mittels einer Bildverarbeitung zur Objekterkennung anhand des zumindest einen Sensorwertes erkannt, besonders bevorzugt mittels einer Deep-Learning basierten Bildverarbeitung.

Daraufhin folgt in dem Verfahren ein Ermitteln einer Ausdehnung der eingeschränkten Durchfahrtsgeometrie basierend auf dem zumindest einen Sensorwert. Eine Ausdehnung der eingeschränkten Durchfahrtsgeometrie ist im Sinne dieser Offenbarung bevorzugt durch die inneren Maße der Durchfahrtsgeometrie definiert. Die Ausdehnung betrifft bevorzugt den eingeschränkt durchfahrbaren Bereich der Durchfahrtsgeometrie. Ferner wird eine Position der eingeschränkten Durchfahrtsgeometrie ermittelt. Bevorzugt werden die geographischen Koordinaten der Durchfahrtsgeometrie in Form von GPS-Daten ermittelt.

Das Verfahren weist als einen weiteren Verfahrensschritt ein Ermitteln zumindest eines weiteren Fahrzeugs mit die ermittelte Ausdehnung überschreitenden Abmessungen und/oder mit einer zur Position der eingeschränkten Durchfahrtsgeometrie führenden Route auf. Bevorzugt werden Abmessungen und/oder Routen einer Vielzahl von Fahrzeugen basierend auf von der Vielzahl von Fahrzeugen gesendeten cooperative awareness messages, CAMs, ermittelt. Bevorzugt wird die ermittelte Ausdehnung mit den ermittelten Abmessungen verglichen und das zumindest eine weitere Fahrzeug aus der Vielzahl von Fahrzeugen ermittelt, wenn seine Abmessungen die ermittelte Ausdehnung überschreiten. Ferner bevorzugt wird die ermittelte Position mit den ermittelten Routen verglichen und das zumindest eine weitere Fahrzeug aus der Vielzahl von Fahrzeugen ermittelt, wenn seine Route zu der Position führt. In einem weiteren Schritt wird bevorzugt die Nachricht an das zumindest eine ermittelte weitere Fahrzeug übermittelt.

In einem weiteren Schritt des Verfahrens wird eine die ermittelte Ausdehnung und Position der eingeschränkten Durchfahrtsgeometrie betreffende Nachricht zur Ausgabe durch das zumindest eine weitere Fahrzeug erstellt. Ferner wird die erstellte Nachricht in dem Verfahren an das zumindest eine weitere Fahrzeug, einen Server und/oder eine Road Side Unit übermittelt. Bevorzugt erfolgt die Übermittelung nach dem C-V2X-Standard oder nach dem WLAN-Protokoll IEEE 802.11p. Ferner bevorzugt erfolgt die Übermittelung mit einer cooperative awareness message, CAM. Bevorzugt wird die Nachricht von dem Server und/oder der Road Side Unit an das zumindest eine weitere Fahrzeug weitergeleitet. Ferner bevorzugt wird die Nachricht von dem Server und/oder der Road Side Unit gespeichert. Durch wiederholtes Durchführen des erfindungsgemäßen Verfahrens kann so vorteilhaft eine Übersicht über Ausdehnung und Position einer Vielzahl von eingeschränkten Durchfahrtsgeometrien in einer Umgebung erstellt werden.

Durch das erfindungsgemäße Verfahren wird vorteilhaft gewährleistet, dass eingeschränkte Durchfahrtsgeometrien von Fahrzeugen frühzeitig erkannt werden. Die Einschränkungen werden dabei vorteilhaft auch erkannt, wenn Warnschilder fehlen oder verdeckt sind. Ein weiterer Vorteil des Verfahrens ist, dass aktuelle Ausdehnungen von eingeschränkten Durchfahrtsgeometrien erfasst und übermittelt werden, während Warnschilder immer nur den zum Zeitpunkt des Aufstellens gemessenen Wert wiedergeben. Das Verfahren führt ferner vorteilhaft dazu, dass die Nachricht nur an Fahrzeuge übermittelt wird, die von der eingeschränkten Durchfahrtsgeometrie betroffen sind. So werden vorteilhaft Energie und Ressourcen gespart und unnötige Ablenkungen von Fahrern vermieden.

In bevorzugter Ausgestaltung des erfindungsgemäßen Verfahrens ist vorgesehen, dass das Ermitteln der Ausdehnung das Ermitteln einer maximalen Durchfahrtshöhe, einer maximalen Durchfahrtsbreite und/oder eines dreidimensionalen Fahrkorridors anhand des zumindest einen Sensorwertes umfasst. Eine maximale Durchfahrtshöhe beziehungsweise Durchfahrtsbreite ist bevorzugt eine Längenangabe, die von einer Höhe beziehungsweise Breite eines Fahrzeugs nicht überschritten werden darf, um eine unfallfreie Durchfahrt durch die eingeschränkte Durchfahrtsgeometrie zu gewährleisten. Der dreidimensionale Fahrkorridor wird bevorzugt als ein Negativ der eingeschränkten Durchfahrtsgeometrie ermittelt. Für ein Fahrzeug, das durch den dreidimensionalen Fahrkorridor fahren kann, ohne die seitlichen Begrenzungen des Korridors zu verlassen, ist eine unfallfreie Durchfahrt durch die eingeschränkte Durchfahrtsgeometrie gewährleistet.

Ein weiterer Aspekt der Erfindung betrifft ein Verfahren eines Fahrzeugs zur Fahrzeugsteuerung in Verkehrssituationen mit eingeschränkter Durchfahrtsgeometrie. Das Verfahren weist als einen Schritt ein Empfangen einer Nachricht von einem weiteren Fahrzeug auf, wobei die Nachricht die Position und Ausdehnung einer eingeschränkten Durchfahrtsgeometrie enthält. Bevorzugt wird die Nachricht von dem weiteren Fahrzeug mittels eines erfindungsgemäßen Verfahrens eines Fahrzeugs zur Umfelderfassung in Verkehrssituationen mit eingeschränkter Durchfahrtsgeometrie erstellt und übermittelt. Die Nachricht ist bevorzugt eine Nachricht gemäß des C-V2X-Standards oder des WLAN-Protokolls IEEE 802.11p. Bevorzugt wird die Nachricht von dem weiteren Fahrzeug direkt empfangen oder indirekt über einen Server und/oder eine Road Side Unit empfangen.

In einem weiteren Verfahrensschritt wird die Ausdehnung der eingeschränkten Durchfahrtsgeometrie mit Abmessungen des Fahrzeugs verglichen. Mit anderen Worten wird in diesem Verfahrensschritt geprüft, ob das Fahrzeug durch die Ausdehnung der eingeschränkten Durchfahrtsgeometrie passt.

In dem Verfahren wird ferner eine Mitteilung basierend auf dem Vergleich erstellt und durch ein Ausgabemittel des Fahrzeugs ausgegeben. Die Mitteilung beinhaltet bevorzugt eine Benachrichtigung, dass die Durchfahrt des Fahrzeugs durch die eingeschränkte Durchfahrtsgeometrie möglich ist, wenn der Vergleich ergeben hat, dass die Abmessungen des Fahrzeugs die Ausdehnung unterschreiten. Alternativ bevorzugt wird die Mitteilung nicht erstellt und ausgegeben, wenn der Vergleich ergeben hat, dass die Abmessungen des Fahrzeugs die Ausdehnung unterschreiten. Die Mitteilung beinhaltet bevorzugt eine Benachrichtigung, dass die Durchfahrt des Fahrzeugs durch die eingeschränkte Durchfahrtsgeometrie nicht möglich ist, wenn der Vergleich ergeben hat, dass die Abmessungen des Fahrzeugs die Ausdehnung überschreiten. Das Ausgabemittel ist bevorzugt ein Display, wie beispielsweise ein Zentraldisplay des Fahrzeugs, ein Display eines elektronischen Geräts innerhalb des Fahrzeugs oder ein Head-Up-Display des Fahrzeugs. Die Mitteilung wird bevorzugt als Text und/oder bildliches Symbol durch das Ausgabemittel ausgegeben. Ferner bevorzugt wird die Mitteilung als eine Augmented Reality (AR)-Anzeige von dem Ausgabemittel überlagernd mit der realen Umgebung des Fahrzeugs ausgeben.

Eine bevorzugte Durchführungsform sieht einen Vergleichen der Position der eingeschränkten Durchfahrtsgeometrie mit einer aktuellen Route des Fahrzeugs vor. Bevorzugt wird bei dem Vergleich ermittelt, ob die eingeschränkte Durchfahrtsgeometrie auf der aktuellen Route des Fahrzeugs liegt. Zusätzlich oder alternativ werden aktuelle Abmessungen des Fahrzeugs durch das Fahrzeug ermittelt und die Ausdehnung der eingeschränkten Durchfahrtsgeometrie wird mit den aktuellen Abmessungen des Fahrzeugs verglichen. Mit anderen Worten wird geprüft, ob das Fahrzeug mit seinen aktuellen Abmessungen durch die Ausdehnung der eingeschränkten Durchfahrtsgeometrie passt. Bevorzugt werden die aktuellen Abmessungen durch das Fahrzeug basierend auf von dem Fahrzeug ausgelesenen aktuellen Fahrzeugeinstellungen ermittelt. Bevorzugt wird eine aktuelle Breite des Fahrzeugs basierend auf einem eingeklappten oder ausgeklappten Zustand der Außenspiegel des Fahrzeugs ermittelt. Ferner bevorzugt wird eine aktuelle Höhe des Fahrzeugs basierend auf einer aktuellen Fahrwerkseinstellung des Fahrzeugs ermittelt. Ferner bevorzugt werden die aktuellen Abmessungen basierend auf einer Nutzereingabe ermittelt. Die Nutzereingabe enthält bevorzugt Informationen zu zumindest einem am Fahrzeug befindlichen Anbauteil.

Basierend auf dem Vergleich wird ferner eine Mitteilung für ein Ausgabemittel des Fahrzeugs erstellt und ausgegeben. Die Mitteilung beinhaltet bevorzugt eine Benachrichtigung, dass eine Weiterfahrt des Fahrzeugs gefahrlos möglich ist, wenn der Vergleich ergeben hat, dass die aktuellen Abmessungen des Fahrzeugs die Ausdehnung unterschreiten und/oder die eingeschränkte Durchfahrtsgeometrie nicht auf der aktuellen Route liegt. Alternativ bevorzugt wird die Mitteilung nicht erstellt und ausgegeben, wenn der Vergleich ergeben hat, dass die aktuellen Abmessungen des Fahrzeugs die Ausdehnung unterschreiten und/oder die eingeschränkte Durchfahrtsgeometrie nicht auf der aktuellen Route liegt. Die Mitteilung beinhaltet ebenfalls bevorzugt eine Benachrichtigung, dass die Weiterfahrt des Fahrzeugs nicht gefahrlos möglich ist, wenn der Vergleich ergeben hat, dass die aktuellen Abmessungen des Fahrzeugs die Ausdehnung überschreiten und die eingeschränkte Durchfahrtsgeometrie auf der aktuellen Route liegt. Bevorzugt wird, wenn der Vergleich ergeben hat, dass die eingeschränkte Durchfahrtsgeometrie auf der aktuellen Route liegt, durch das Fahrzeug nach zumindest einer alternativen Route gesucht. Die zumindest eine alternative Route wird bevorzugt mit einer auf einem Server und/oder einer Road Side Unit gespeicherten Übersicht von einer Vielzahl von in einer Umgebung befindlichen eingeschränkten Durchfahrtsgeometrien verglichen. Bevorzugt liegt keine eingeschränkte Durchfahrtsgeometrie auf der zumindest einen alternativen Route, deren Ausdehnung die Abmessungen des Fahrzeugs unterschreitet. Bevorzugt beinhaltet die Mitteilung zusätzlich einen Hinweis auf zumindest eine alternative Route.

Eine ferner bevorzugte Durchführungsform weist ein Ermitteln zumindest einer für die aktuellen Abmessungen des Fahrzeugs relevanten Fahrzeugeinstellung auf. Bevorzugt wird zumindest eine Fahrzeugeinstellung ermittelt, die die aktuellen Abmessungen des Fahrzeugs im Vergleich mit weiteren möglichen Einstellungen des Fahrzeugs vergrößert, wie beispielsweise ausgeklappte Außenspiegel, eine Fahrwerkseinstellung, welche die Fahrzeughöhe vergrößert, oder ein am Fahrzeug befindliches Anbauteil. Ein Anbauteil ist bevorzugt ein Anhänger oder ein Aufbau des Fahrzeugs. Bevorzugt wird ferner eine Veränderung der relevanten Fahrzeugeinstellung ermittelt, die dazu führt, dass die Abmessungen des Fahrzeugs die Ausdehnung der eingeschränkten Durchfahrtsgeometrie unterschreiten.

Bevorzugt wird ferner ein die relevante Fahrzeugeinstellung betreffender Hinweis durch ein Ausgabemittel des Fahrzeugs ausgegeben. Der Hinweis beinhaltet bevorzugt ferner die Veränderung der relevanten Fahrzeugeinstellung. Mit anderen Worten beinhaltet der Hinweis bevorzugt eine Einstellung, die an dem Fahrzeug vorgenommen werden kann, um eine Fahrt durch die eingeschränkte Durchfahrtsgeometrie zu ermöglichen, wie beispielsweise ein Einklappen eines Außenspiegels, ein Einstellen einer Fahrwerkseinstellung, welche die Fahrzeughöhe verkleinert, oder ein Entfernen eines Anbauteils. Ferner bevorzugt wird die relevante Fahrzeugeinstellung durch das Fahrzeug automatisch angepasst. Mit anderen Worten wird ferner bevorzugt die Veränderung der relevanten Fahrzeugeinstellung automatisch durch das Fahrzeug selbst durchgeführt.

In einer ferner bevorzugten Durchführungsform wird ein Ermitteln aktueller Abmessungen des Fahrzeugs durch Ermitteln zumindest eines am Fahrzeug befindlichen Anbauteils und Abrufen der Abmessungen des zumindest einen Anbauteils von einem Netzwerkserver und/oder dem zumindest einen Anbauteil durchgeführt. Bevorzugt wird das zumindest eine am Fahrzeug befindliche Anbauteil mittels zumindest eines fahrzeugeigenen Sensors und/oder einer Nutzereingabe ermittelt. Ferner bevorzugt ist das zumindest eine Anbauteil zu einer Kommunikation mit dem Fahrzeug ausgebildet und wird mittels der Kommunikation ermittelt.

Bevorzugt werden die Abmessungen des zumindest einen Anbauteils aus einem Look-Up-Table, LUT, welches auf einem Netzwerkserver und/oder im Fahrzeug selber gespeichert ist, abgerufen. Ferner bevorzugt werden die Abmessungen des zumindest einen Anbauteils mittels der Kommunikation von einem Anbauteil, besonders bevorzugt von dem zumindest einen Anbauteil, abgerufen.

Ein weiterer Aspekt der Erfindung betrifft ein Fahrzeug, insbesondere einen Personenkraftwagen mit Verbrennungs-, Elektro- oder Hybridmotor, der dazu ausgebildet ist, das vorstehend beschriebene Verfahren eines Fahrzeugs zur Fahrzeugsteuerung in Verkehrssituationen mit eingeschränkter Durchfahrtsgeometrie durchzuführen. Das Fahrzeug weist ein Kommunikationsmodul auf, das zum Empfangen einer die Position und Ausdehnung einer eingeschränkten Durchfahrtsgeometrie betreffenden Nachricht ausgebildet ist.

Ferner weist das Fahrzeug eine Steuereinheit auf, die bevorzugt dazu ausgebildet ist, Abmessungen des Fahrzeugs, besonders bevorzugt aktuelle Abmessungen des Fahrzeugs, zu ermitteln, die Abmessungen mit der Ausdehnung der eingeschränkten Durchfahrtsgeometrie zu vergleichen und eine Mitteilung basierend auf dem Vergleich zu ermitteln. Das Fahrzeug weist ferner ein zum Ausgeben der Mitteilung ausgebildetes Ausgabemittel auf.

In einer bevorzugten Ausführungsform ist das Fahrzeug ferner dazu ausgebildet, das vorstehend beschriebene erfindungsgemäße Verfahren eines Fahrzeugs zur Umfelderfassung in Verkehrssituationen mit eingeschränkter Durchfahrtsgeometrie durchzuführen. Dazu weist das Fahrzeug bevorzugt ferner einen zum Erfassen zumindest eines Sensorwerts zu einer Fahrzeugumgebung ausgebildeten Sensor auf.

Die Steuereinheit ist bevorzugt ferner dazu ausgebildet, die eingeschränkte Durchfahrtsgeometrie anhand des zumindest einen Sensorwertes zu erkennen, die Ausdehnung der eingeschränkten Durchfahrtsgeometrie anhand des zumindest einen Sensorwertes zu ermitteln und eine Position der eingeschränkten Durchfahrtsgeometrie zu ermitteln. Das Kommunikationsmodul ist bevorzugt ferner dazu ausgebildet, eine die Ausdehnung und Position der eingeschränkten Durchfahrtsgeometrie betreffende Nachricht an ein weiteres Fahrzeug, einen Server und/oder eine Road Side Unit zu übermitteln. Mit anderen Worten ist die Steuereinheit und somit das Fahrzeug ebenfalls zum Durchführen des oben beschriebenen Verfahrens zur Umfelderfassung in Verkehrssituationen mit eingeschränkter Durchfahrtsgeometrie ausgebildet.

In einer ferner bevorzugten Ausgestaltung des erfindungsgemäßen Fahrzeugs ist die Steuereinheit ferner dazu ausgebildet, zumindest eine für die aktuellen Abmessungen des Fahrzeugs relevante Fahrzeugeinstellung zu ermitteln. Ferner ist die Steuereinheit bevorzugt dazu ausgebildet, einen die relevante Fahrzeugeinstellung betreffenden Hinweis durch das Ausgabemittel des Fahrzeugs auszugeben und/oder die relevante Fahrzeugeinstellung automatisch anzupassen.

Ein weiterer Aspekt der Erfindung betrifft ein Computerprogramm, umfassend Befehle, die bei der Ausführung des Programms durch einen Computer, wie beispielsweise eine Steuereinheit eines Fahrzeugs, diesen veranlassen, das erfindungsgemäße Verfahren eines Fahrzeugs zur Umfelderfassung in Verkehrssituationen mit eingeschränkter Durchfahrtsgeometrie, wie vorab beschrieben, auszuführen.

Ein weiterer Aspekt der Erfindung betrifft ein computerlesbares Speichermedium, umfassend Befehle, die bei der Ausführung durch einen Computer, wie beispielsweise eine Steuereinheit eines Fahrzeugs, diesen veranlassen, das erfindungsgemäße Verfahren eines Fahrzeugs zur Umfelderfassung in Verkehrssituationen mit eingeschränkter Durchfahrtsgeometrie, wie vorab beschrieben, auszuführen.

Ein weiterer Aspekt der Erfindung betrifft ein Computerprogramm, umfassend Befehle, die bei der Ausführung des Programms durch einen Computer, wie beispielsweise eine Steuereinheit eines Fahrzeugs, diesen veranlassen, das erfindungsgemäße Verfahren eines Fahrzeugs zur Fahrzeugsteuerung in Verkehrssituationen mit eingeschränkter Durchfahrtsgeometrie, wie vorab beschrieben, auszuführen.

Ein weiterer Aspekt der Erfindung betrifft ein computerlesbares Speichermedium, umfassend Befehle, die bei der Ausführung durch einen Computer, wie beispielsweise eine Steuereinheit eines Fahrzeugs, diesen veranlassen, das erfindungsgemäße Verfahren eines Fahrzeugs zur Fahrzeugsteuerung in Verkehrssituationen mit eingeschränkter Durchfahrtsgeometrie, wie vorab beschrieben, auszuführen.

Weitere bevorzugte Ausgestaltungen der Erfindung ergeben sich aus den übrigen, in den Unteransprüchen genannten Merkmalen.

Die verschiedenen, in dieser Anmeldung genannten Aus- und Durchführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein schematisches Ablaufdiagramm eines erfindungsgemäßen Verfahrens zur Umfelderfassung in Verkehrssituationen mit eingeschränkter Durchfahrtsgeometrie in einer beispielhaften Durchführungsform;
- Figur 2: ein schematisches Ablaufdiagramm eines erfindungsgemäßen Verfahrens zur Fahrzeugsteuerung in Verkehrssituationen mit eingeschränkter Durchfahrtsgeometrie in einer beispielhaften Durchführungsform;
- Figur 3: eine schematische Darstellung eines erfindungsgemäßen Fahrzeugs gemäß einer beispielhaften Ausführungsform;
- Figur 4: ein Erfassen, Erkennen und Ermitteln gemäß Verfahrensschritten eines erfindungsgemäßen Verfahrens zur Umfelderfassung gemäß einer beispielhaften Durchführungsform;
- Figur 5: ein Ermitteln, Erstellen und Übermitteln gemäß Verfahrensschritten eines erfindungsgemäßen Verfahrens zur Umfelderfassung gemäß einer beispielhaften Durchführungsform;
- Figur 6: eine bildliche Darstellung einer Übersicht von eingeschränkten Durchfahrtsgeometrien in einer Umgebung und
- Figur 7: ein Ausgeben gemäß eines Verfahrensschritts eines erfindungsgemäßen Verfahrens gemäß einer beispielhaften Durchführungsform.

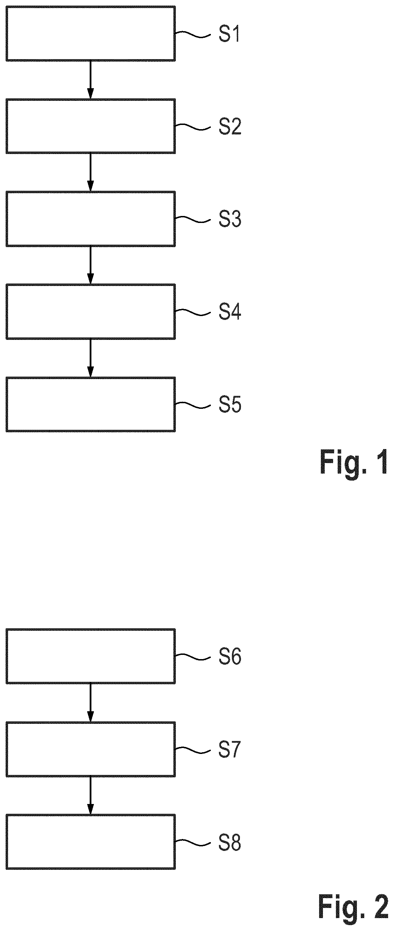

Figur 1 zeigt ein schematisches Ablaufdiagramm eines erfindungsgemäßen Verfahrens zur Umfelderfassung in Verkehrssituationen mit eingeschränkter Durchfahrtsgeometrie in einer beispielhaften Durchführungsform.

In einem ersten Schritt S1 wird mittels zumindest eines Sensors zumindest ein Sensorwert zu einer Fahrzeugumgebung erfasst. Ein zweiter Schritt S2 beinhaltet ein Erkennen einer eingeschränkten Durchfahrtsgeometrie, insbesondere einer Brücke oder eines Tunnels, anhand des im ersten Schritt S1 erfassten zumindest einen Sensorwerts.

In einem dritten Schritt S3 folgt ein Ermitteln einer Ausdehnung der eingeschränkten Durchfahrtsgeometrie basierend auf dem im ersten Schritt S1 erfassten zumindest einen Sensorwert und ein Ermitteln einer Position der eingeschränkten Durchfahrtsgeometrie. Die Ausdehnung wird dabei insbesondere als eine maximale Durchfahrtshöhe und eine maximale Durchfahrtsbreite der eingeschränkten Durchfahrtsgeometrie ermittelt und die Position als geographische Koordinaten der Durchfahrtsgeometrie in Form von GPS-Daten.

Aus der im dritten Schritt S3 ermittelten Ausdehnung und Position der eingeschränkten Durchfahrtsgeometrie wird in einem vierten Schritt S4 eine Nachricht zur Ausgabe durch zumindest ein weiteres Fahrzeug erstellt. Das zumindest eine weitere Fahrzeug wird insbesondere als ein Fahrzeug ermittelt, das von der eingeschränkten Durchfahrtsgeometrie betroffen ist, dessen Abmessungen also die Ausdehnung überschreiten oder dessen Route zu der Position führt.

In einem fünften Schritt S5 wird dann die im vierten Schritt S4 erstellte Nachricht an das zumindest eine weitere Fahrzeug übermittelt, insbesondere mittels C-V2X oder WLANp Kommunikation und direkt oder über einen Server oder eine Road Side Unit.

Figur 2 zeigt ein schematisches Ablaufdiagramm eines erfindungsgemäßen Verfahrens zur Fahrzeugsteuerung in Verkehrssituationen mit eingeschränkter Durchfahrtsgeometrie in einer beispielhaften Durchführungsform.

In einem sechsten Schritt S6 wird von dem Fahrzeug eine Nachricht empfangen, die die Position und Ausdehnung einer eingeschränkten Durchfahrtsgeometrie enthält. Die Nachricht wird von einem weiteren Fahrzeug empfangen und ist insbesondere die im vierten Schritt S4 erstellte und im fünften Schritt S5 übermittelte Nachricht.

Dann wird in einem siebten Schritt S7 die Ausdehnung der eingeschränkten Durchfahrtsgeometrie mit Abmessungen des Fahrzeugs verglichen. Die Abmessungen sind insbesondere aktuelle Abmessungen des Fahrzeugs, die durch das Fahrzeug selbst ermittelt werden. Zusätzlich wird insbesondere die Position mit einer aktuellen Route des Fahrzeugs verglichen. Ferner wird eine für die aktuellen Abmessungen relevante Fahrzeugeinstellung ermittelt.

In einem achten Schritt S8 wird eine Mitteilung basierend auf den durchgeführten Vergleichen erstellt und durch ein Ausgabemittel des Fahrzeugs ausgegeben. Die Mitteilung wird in diesem Fall insbesondere ausgegeben, da die im siebten Schritt S7 durchgeführten Vergleiche ergeben haben, dass die Abmessungen des Fahrzeugs die Ausdehnung überschreiten und die Position auf der aktuellen Route des Fahrzeugs liegt. Die Mitteilung enthält insbesondere einen Hinweis, dass eine Weiterfahrt auf der aktuellen Route nicht gefahrlos möglich ist, eine Beschreibung einer alternativen Route und eine Fahrzeugeinstellung, die vorgenommen werden kann, um die Fahrt durch die eingeschränkte Durchfahrtsgeometrie zu ermöglichen.

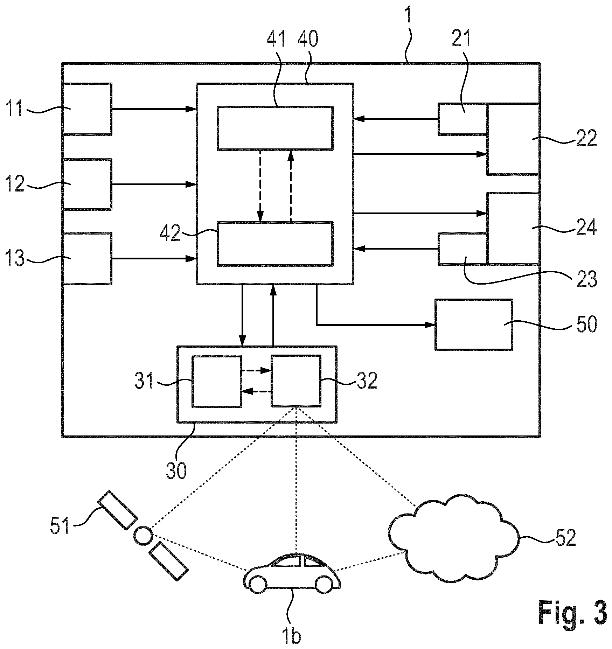

Figur 3 zeigt eine schematische Darstellung, insbesondere ein Blockdiagramm eines beispielhaften Fahrzeugs 1, insbesondere eines zweispurigen Kraftfahrzeugs mit Verbrennungs-, Elektro- oder Hybridmotor. Das Fahrzeug 1 ist insbesondere dazu ausgebildet, ein erfindungsgemäßes Verfahren zur Umfelderfassung in Verkehrssituationen mit eingeschränkter Durchfahrtsgeometrie, wie vorstehend beschrieben und in Figur 1 gezeigt, durchzuführen. Ferner ist das Fahrzeug 1 dazu ausgebildet, ein erfindungsgemäßes Verfahren zur Fahrzeugsteuerung in Verkehrssituationen mit eingeschränkter Durchfahrtsgeometrie, wie vorstehend beschrieben und in Figur 2 gezeigt, durchzuführen.

Dazu weist das Fahrzeug 1 zunächst eine Vielzahl erster Sensoren auf, insbesondere einen ersten Sensor 11, einen zweiten Sensor 12 und einen dritten Sensor 13. Die ersten Sensoren 11, 12, 13 sind eingerichtet zum Erfassen von Umgebungsdaten des Fahrzeugs 1 und umfassen beispielsweise eine Kamera zum Erfassen von Bildern einer Umgebung des Fahrzeugs 1, und/oder Abstandssensoren, wie beispielsweise Ultraschallsensoren, zum Erfassen von Abständen zu das Fahrzeug 1 umgebenden Objekten. Die ersten Sensoren 11, 12, 13 übertragen die von ihnen erfassten Sensorwerte zur Fahrzeugumgebung an eine Steuereinheit 40 des Fahrzeugs 1. Die Steuereinheit 40 ist dazu ausgebildet, anhand der Sensorwerte eine eingeschränkte Durchfahrtsgeometrie zu erkennen, eine Ausdehnung und Position dieser zu ermitteln und daraus eine Nachricht zur Ausgabe in einem zweiten Fahrzeug 1b zu erstellen. Hierzu verfügt die Steuereinheit 40 über einen internen Speicher 41 und eine CPU 42, welche miteinander kommunizieren, beispielsweise über einen geeigneten Datenbus.

Das Fahrzeug 1 weist ferner ein Kommunikationsmodul 30 mit einem Speicher 31 und einem oder mehreren Transpondern beziehungsweise Sendeempfängern 32 auf. Bei dem Transponder 32 handelt es sich um einen Funk-, WLAN-, GPS- oder Bluetooth-Sendeempfänger oder dergleichen, insbesondere um einen zur Kommunikation in einem Kommunikationsnetzwerk eingerichteten Transponder. Der Transponder kommuniziert mit dem internen Speicher 31 des Kommunikationsmoduls 30, beispielsweise über einen geeigneten Datenbus. Mittels des Transponders 32 kann beispielsweise die aktuelle Position des Fahrzeugs 1 durch Kommunikation mit einem GPS-Satelliten 51 ermittelt und diese im internen Speicher 31 gespeichert werden. Darüber hinaus ist das Kommunikationsmodul 30 dafür eingerichtet, über eine V2V-Kommunikation mit dem zweiten Fahrzeug 1b zu kommunizieren, insbesondere auch über ein Kommunikationsnetzwerk 52. Ferner kann das Kommunikationsmodul 30 auch zur Kommunikation mit einem Server des Kommunikationsnetzwerks 52 eingerichtet sein.

Das Kommunikationsmodul 30 kommuniziert auch mit der Steuereinheit 40. Insbesondere übermittelt es dieser empfangene Daten und/oder empfängt von dieser zu sendende Daten. So kann die Steuereinheit 40 mittels des Kommunikationsmoduls 30 die erstellte Nachricht an das zweite Fahrzeug 1b übertragen. Ferner kann die Steuereinheit 40 mittels des Kommunikationsmoduls 30 von dem zweiten Fahrzeug 1b eine Nachricht empfangen, die die Position und Ausdehnung einer eingeschränkten Durchfahrtsgeometrie enthält.

Bei dem Kommunikationsnetzwerk 52 handelt es sich bevorzugt um ein Netzwerk gemäß 3GPP-Standard, beispielsweise um ein LTE, LTE-A (4G) oder 5G Kommunikationsnetzwerk. Das Kommunikationsnetzwerk kann ferner für die folgenden Operationen beziehungsweise gemäß der folgenden Standards ausgelegt sein: High Speed Packet Access (HSPA), a Universal Mobile Telecommunication System (UMTS), UMTS Terrestrial Radio Access Network (UTRAN), evolved-UTRAN (e-UTRAN), Global System for Mobile communication (GSM), Enhanced Data rates for GSM Evolution (EDGE), GSM/EDGE Radio Access Network (GERAN). Alternativ oder zusätzlich kann das Kommunikationsnetzwerk 52 auch gemäß einem der folgenden Standards ausgebildet sein: Worldwide Inter-operability for Microwave Access (WIMAX) network IEEE 802.16, Wireless Local Area Network (WLAN) IEEE 802.11. Ebenfalls bevorzugt verwendet das Kommunikationsnetzwerk 52 eine der folgenden Kodierungsverfahren: Orthogonal Frequency Division Multiple Access (OFDMA), Time Division Multiple Access (TDMA), Code Division Multiple Access (CDMA), a Wideband-CDMA (WCDMA), Frequency Division Multiple Access (FDMA) oder Spatial Division Multiple Access (SDMA) etc.

Die Steuereinheit 40 ist ferner dazu ausgebildet, die Ausdehnung der eingeschränkten Durchfahrtsgeometrie mit Abmessungen des Fahrzeugs 1 und die Position mit einer aktuellen Route des Fahrzeugs 1 zu vergleichen. Dazu kann die Steuereinheit 40 aktuelle Abmessungen des Fahrzeugs 1 basierend auf Sensorsignalen von zweiten Sensoren 21, 23, insbesondere einem vierten Sensor 21, der eine erste Fahrzeugkomponente 22 überwacht, und einem fünften Sensor 23, der eine zweite Fahrzeugkomponente 24 überwacht, ermitteln. Die erste Fahrzeugkomponente 22 ist insbesondere ein Außenspiegel des Fahrzeugs 1 und die Steuereinheit 40 kann mittels des vierten Sensors 21 einen ein- oder ausgeklappten Zustand des Spiegels erkennen. Die zweite Fahrzeugkomponente 24 ist insbesondere ein adaptives Fahrwerk, dessen Zustand die Steuereinheit 40 mittels des fünften Sensors 23 erkennen kann. Ferner kann die Steuereinheit 40 eine für die aktuellen Abmessungen relevante Fahrzeugeinstellung ermitteln.

Die Steuereinheit 40 kann ferner eine Mitteilung basierend auf dem Vergleich erstellen und durch ein Ausgabemittel 50 des Fahrzeugs 1 ausgegeben. Die Mitteilung enthält beispielsweise einen Hinweis, dass eine Weiterfahrt auf der aktuellen Route nicht gefahrlos möglich ist, eine Beschreibung einer alternativen Route und eine Fahrzeugeinstellung, die vorgenommen werden kann, um die Fahrt durch die eingeschränkte Durchfahrtsgeometrie zu ermöglichen. Die Fahrzeugeinstellung kann die Steuereinheit 40 auch automatisch einstellen, indem sie Stellsignale an die Fahrzeugkomponenten 22, 24 sendet.

Die Steuereinheit 40 steht also insbesondere in Kommunikationsverbindung mit zumindest den ersten Sensoren 11, 12, 13, den zweiten Sensoren 21, 23, den Fahrzeugkomponenten 22, 24, dem Ausgabemittel 50 und dem Kommunikationsmodul 30, beispielsweise über eine oder mehrere jeweilige CAN-Verbindungen, eine oder mehrere jeweilige SPI-Verbindungen oder andere geeignete Datenverbindungen.

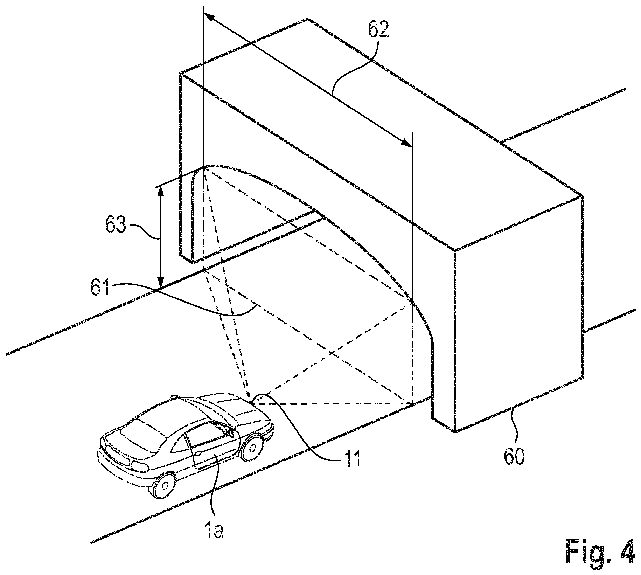

Figur 4 zeigt ein Erfassen, Erkennen und Ermitteln gemäß Verfahrensschritten S1, S2, S3 eines erfindungsgemäßen Verfahrens zur Umfelderfassung gemäß einer beispielhaften Durchführungsform. Ein erstes Fahrzeug 1a ist gezeigt, das sich vor einer eingeschränkten Durchfahrtsgeometrie 60 befindet, insbesondere vor eine Brücke 60, die die Durchfahrt auf der Straße einschränkt. Mittels eines Sensors 11 erfasst das Fahrzeug 1a einen Sensorwert und erkennt anhand des Sensorwertes eine eingeschränkte Durchfahrtsgeometrie 60 mit einer Ausdehnung 61. Das Fahrzeug 1a ist dazu ausgebildet, die Ausdehnung 61, insbesondere eine Durchfahrtsbreite 62 und eine Durchfahrtshöhe 63 der Ausdehnung 61, anhand des Sensorwertes zu ermitteln und eine Position der eingeschränkten Durchfahrtsgeometrie 60 zu ermitteln.

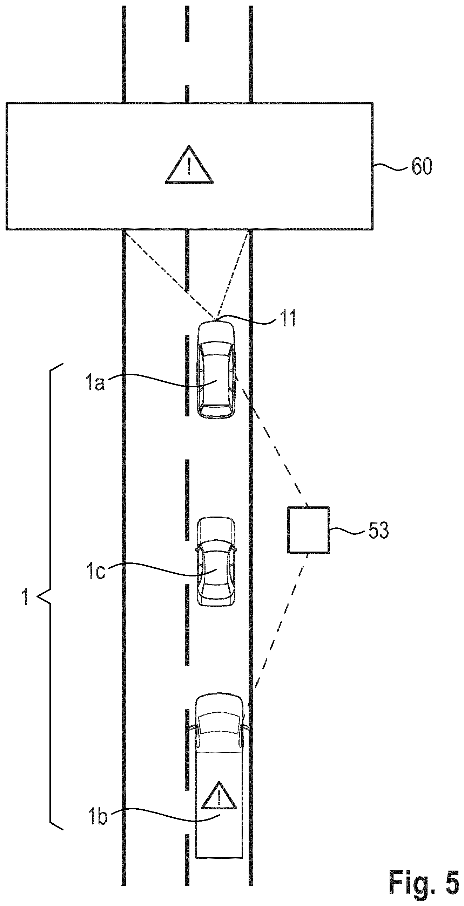

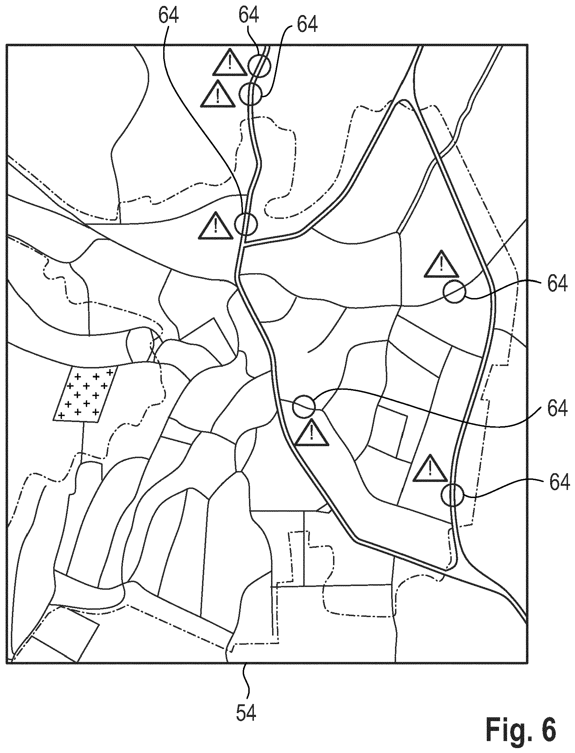

Figur 5 zeigt ein Ermitteln, Erstellen und Übermitteln gemäß Verfahrensschritten S3, S4, S5 eines erfindungsgemäßen Verfahrens zur Umfelderfassung in einer beispielhaften Durchführungsform. Wie in Figur 4 in einer anderen Perspektive dargestellt, ermittelt das Fahrzeug 1a basierend auf zumindest einem Sensorwert des Sensors 11 die Ausdehnung 61 und die Position der eingeschränkten Durchfahrtsgeometrie 60. Das Fahrzeug erstellt dann eine Nachricht zur Ausgabe in einem weiteren Fahrzeug, welche die Ausdehnung 61 und Position betrifft. Darauf folgt ein Übermitteln der Nachricht an das weitere Fahrzeug, hier insbesondere ein zweites Fahrzeug 1b. In dieser beispielhaften Durchführungsform wird die Nachricht an eine Road Side Unit 53 gesendet und von dem zweiten Fahrzeug 1b von der Road Side Unit 53 empfangen. Das so durchgeführte Übermitteln ist durch die fein gestrichelten Linien dargestellt. Insbesondere wird die Nachricht von der Road Side Unit 53 zusätzlich gespeichert und basierend auf einer Vielzahl von Nachrichten eine Übersicht über Positionen 64 und Ausdehnungen 61 von einer Vielzahl von eingeschränkten Durchfahrtsgeometrien 60 in einer Umgebung 54 erstellt, die in Figur 6 bildlich dargestellt ist.

In dem in Figur 5 gezeigten Fall wird die Ausdehnung insbesondere von dem zweiten Fahrzeug 1b und nicht von einem dritten Fahrzeug 1c empfangen. Das zweite Fahrzeug 1b ist hier insbesondere ein Lastkraftwagen, der Abmessungen hat, welche die Ausdehnung 61 überschreiten, und dessen Route zu der Position 64 führt. Das zweite Fahrzeug 1b ist also von der eingeschränkten Durchfahrtsgeometrie 60 betroffen. Die Nachricht wird deshalb an das zweite Fahrzeug 1b übermittelt, um eine auf der Nachricht basierende Ausgabe des zweiten Fahrzeugs 1b zu ermöglichen, die im Folgenden im Detail beschrieben ist. Das dritte Fahrzeug 1c ist hier ein Personenkraftwagen mit geringeren Abmessungen, so dass die eingeschränkte Durchfahrtsgeometrie 60 für das dritte Fahrzeug 1c nicht relevant ist. Das erfindungsgemäße Verfahren führt also vorteilhaft dazu, dass der Fahrer des dritten Fahrzeugs 1c nicht durch eine auf der Ausdehnung 61 basierende Ausgabe, die ihn nicht betrifft, abgelenkt werden kann.

Das zweite Fahrzeug 1b vergleicht die Ausdehnung 61 der eingeschränkten Durchfahrtsgeometrie 60 mit aktuellen Abmessungen des Fahrzeugs 1b und die Position 64 mit seiner aktuellen Route. Ferner wird durch das Fahrzeug 1b eine für die aktuellen Abmessungen relevante Fahrzeugeinstellung ermittelt.

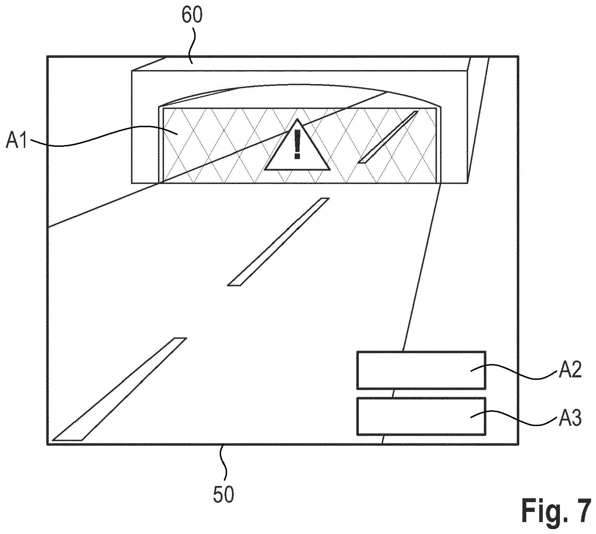

Das Fahrzeug 1b erstellt dann eine Mitteilung basierend auf dem Vergleich und gibt diese durch ein Ausgabemittel 50 aus. Die Ausgabe A1, A2, A3 des Fahrzeugs 1b ist in Figur 7 gemäß einer beispielhaften Durchführungsform des beschriebenen Verfahrens gezeigt. Dargestellt ist ein Ausgabemittel 50, insbesondere ein Head-Up-Display, des zweiten Fahrzeugs 1b. Vor dem Fahrzeug 1b befindet sich die eingeschränkte Durchfahrtsgeometrie 60. Der durchgeführte Vergleich hat ergeben, dass die Abmessungen des Fahrzeugs die Ausdehnung überschreiten und die Position 64 auf der aktuellen Route des Fahrzeugs liegt. Die Mitteilung enthält deshalb insbesondere einen Hinweis, dass eine Weiterfahrt auf der aktuellen Route nicht gefahrlos möglich ist, der als eine erste Ausgabe A1 mittels Augmented Reality, AR, ausgegeben wird. Die erste Ausgabe A1 ist insbesondere als eine Darstellung der Ausdehnung 61 rot eingefärbt und mit einem Warnsymbol versehen.

Eine zweite Ausgabe A2 beinhaltet ferner eine Mitteilung, die eine ermittelte alternative Route beschreibt. Die alternative Route wurde insbesondere basierend auf der in Figur 6 dargestellten Übersicht erstellt, so dass keine der eingeschränkten Durchfahrtsgeometrien 60, deren Ausdehnungen die Abmessungen des zweiten Fahrzeugs 1b unterschreiten, auf der alternativen Route liegt. In dem in Figur 7 gezeigten Fall wird zusätzlich eine Fahrzeugeinstellung, insbesondere eine Einstellung eines adaptiven Fahrwerks, ermittelt, welche die Höhe des Fahrzeugs 1b reduzieren und so eine Durchfahrt ermöglichen würde. Basierend auf der ermittelten Einstellung wird eine dritte Ausgabe A3 ausgegeben. Der Fahrer des zweiten Fahrzeugs 1b erfährt durch die Ausgabe A1, A2, A3 vorteilhaft schnell und übersichtlich, dass eine Fahrt durch die eingeschränkte Durchfahrtsgeometrie 60 nicht gefahrlos möglich ist, und kann sich entscheiden, ob er die alternative Route verwenden möchte oder die Fahrzeugeinstellung anpassen möchte.

### Bezugszeichenliste

- 1: Fahrzeug
- 1a: erstes Fahrzeug
- 1b: zweites Fahrzeug
- 1c: drittes Fahrzeug
- 11: erster Sensor
- 12: zweiter Sensor
- 13: dritter Sensor
- 21: vierter Sensor
- 22: erste Fahrzeugkomponente
- 23: fünfter Sensor
- 24: zweite Fahrzeugkomponente
- 30: Kommunikationseinheit
- 31: interner Speicher
- 32: Sendeempfänger
- 40: Steuereinheit
- 41: interner Speicher
- 42: CPU
- 50: Ausgabemittel
- 51: Satellit
- 52: Netzwerk
- 53: Road Side Unit
- 54: Umgebung
- 60: eingeschränkte Durchfahrtsgeometrie
- 61: Ausdehnung
- 62: Durchfahrtsbreite
- 63: Durchfahrtshöhe
- 64: Position
- A1: erste Ausgabe
- A2: zweite Ausgabe
- A3: dritte Ausgabe
- S1: erster Verfahrensschritt
- S2: zweiter Verfahrensschritt
- S3: dritter Verfahrensschritt
- S4: vierter Verfahrensschritt
- S5: fünfter Verfahrensschritt
- S6: sechster Verfahrensschritt
- S7: siebter Verfahrensschritt
- S8: achter Verfahrensschritt

## Patentansprüche

1. Verfahren eines Fahrzeugs (1) zur Umfelderfassung in Verkehrssituationen mit eingeschränkter Durchfahrtsgeometrie (60), das Verfahren aufweisend die Schritte:
- Erfassen (S1), mittels zumindest eines Sensors (11, 12, 13), zumindest eines Sensorwertes zu einer Fahrzeugumgebung;
- Erkennen (S2) einer eingeschränkten Durchfahrtsgeometrie (60) anhand des zumindest einen Sensorwertes;
- Ermitteln (S3) einer Position (64) der eingeschränkten Durchfahrtsgeometrie (60) und einer Ausdehnung (61) der eingeschränkten Durchfahrtsgeometrie (60) basierend auf dem zumindest einen Sensorwert;
- Ermitteln zumindest eines weiteren Fahrzeugs (1b) mit die ermittelte Ausdehnung (61) überschreitenden Abmessungen und/oder einer zur Position (64) der eingeschränkten Durchfahrtsgeometrie (60) führenden Route;
- Erstellen (S4) einer die ermittelte Ausdehnung (61) und Position (64) der eingeschränkten Durchfahrtsgeometrie (60) betreffende Nachricht zur Ausgabe durch das zumindest eine weitere Fahrzeug (1b); und
- Übermitteln (S5) der Nachricht an das zumindest eine weitere Fahrzeug (1b), einen Server und/oder eine Road Side Unit (53).

2. Verfahren nach Anspruch 1, wobei das Ermitteln (S3) der Ausdehnung (61) ein Ermitteln einer maximalen Durchfahrtshöhe (63), einer maximalen Durchfahrtsbreite (62) und/oder eines dreidimensionalen Fahrkorridors anhand des zumindest einen Sensorwertes umfasst.

3. Verfahren eines Fahrzeugs (1) zur Fahrzeugsteuerung in Verkehrssituationen mit eingeschränkter Durchfahrtsgeometrie (60), das Verfahren aufweisend die Schritte:
- Senden einer Nachricht enthaltend Informationen zu Abmessungen und einer Route des Fahrzeugs an ein weiteres Fahrzeug zur Ermittlung einer Überschreitung einer Ausdehnung einer eingeschränkten Durchfahrtsgeometrie von den Abmessungen und/oder einer Führung der Route zur Position der eingeschränkten Durchfahrtsgeometrie;
- Empfangen (S6) einer Nachricht enthaltend die Position (64) und Ausdehnung (61) der eingeschränkten Durchfahrtsgeometrie (60) von dem weiteren Fahrzeug (1a);
- Vergleichen (S7) der Ausdehnung (61) der eingeschränkten Durchfahrtsgeometrie (60) mit den Abmessungen des Fahrzeugs (1); und
- Erstellen und Ausgeben (S8) einer Mitteilung (A1, A2, A3) durch ein Ausgabemittel (50) des Fahrzeugs (1) basierend auf dem Vergleich.

4. Verfahren nach Anspruch 3, ferner aufweisend:
- Vergleich der Position (64) der eingeschränkten Durchfahrtsgeometrie (60) mit einer aktuellen Route des Fahrzeugs (1); und
- basierend auf dem Vergleich, Anpassung der Route; und/oder
- Ermitteln aktueller Abmessungen des Fahrzeugs (1) durch das Fahrzeug (1).

5. Verfahren nach Anspruch 4, ferner aufweisend:
- Ermitteln zumindest einer für die aktuellen Abmessungen des Fahrzeugs (1) relevanten Fahrzeugeinstellung; und
- Ausgeben eines die relevante Fahrzeugeinstellung betreffenden Hinweises (A3) durch ein Ausgabemittel (50) des Fahrzeugs (1); und/oder
- automatische Anpassung der relevanten Fahrzeugeinstellung durch das Fahrzeug (1).

6. Verfahren nach Anspruch 4 oder 5, ferner aufweisend:
- Ermitteln aktueller Abmessungen des Fahrzeugs (1) durch Ermitteln zumindest eines am Fahrzeug (1) befindlichen Anbauteils; und
- Abrufen der Abmessungen des zumindest einen Anbauteils von einem Netzwerkserver und/oder zumindest einem Anbauteil.

7. Fahrzeug (1), aufweisend:
- ein zum Empfangen einer die Position (64) und Ausdehnung (61) einer eingeschränkten Durchfahrtsgeometrie (60) betreffenden Nachricht und zum Senden einer die Abmessungen und Route des Fahrzeugs betreffenden Nachricht zur Ermittlung einer Überschreitung der Ausdehnung der eingeschränkten Durchfahrtsgeometrie von den Abmessungen und/oder einer Führung einer Route des Fahrzeugs zur Position der eingeschränkten Durchfahrtsgeometrie ausgebildetes Kommunikationsmodul (30);
- eine zum Ermitteln von Abmessungen des Fahrzeugs (1), zum Vergleichen der Abmessungen des Fahrzeugs (1) mit der Ausdehnung (61) der eingeschränkten Durchfahrtsgeometrie (60) und zum Ermitteln einer Mitteilung (A1, A2, A3) basierend auf dem Vergleich ausgebildete Steuereinheit (40); und
- ein zum Ausgeben der Mitteilung (A1, A2, A3) ausgebildetes Ausgabemittel (50).

8. Fahrzeug (1) nach Anspruch 7, ferner aufweisend:
- zumindest einen zum Erfassen zumindest eines Sensorwertes zu einer Fahrzeugumgebung ausgebildeten Sensor (11, 12, 13);
- wobei die Steuereinheit (40) ferner dazu ausgebildet ist, die eingeschränkte Durchfahrtsgeometrie (60) anhand des zumindest einen Sensorwertes zu erkennen, die Ausdehnung (61) der eingeschränkten Durchfahrtsgeometrie (60) anhand des zumindest einen Sensorwerts zu ermitteln und eine Position (64) der eingeschränkten Durchfahrtsgeometrie (60) zu ermitteln, und
- wobei das Kommunikationsmodul (30) ferner dazu ausgebildet ist, eine die Ausdehnung (61) und Position (64) der eingeschränkten Durchfahrtsgeometrie (60) betreffende Nachricht an ein weiteres Fahrzeug (1b), einen Server und/oder eine Road Side Unit zu übermitteln.

9. Fahrzeug (1) nach einem der Ansprüche 7 oder 8, wobei die Steuereinheit (40) ferner dazu ausgebildet ist, zumindest eine für die aktuellen Abmessungen des Fahrzeugs (1) relevante Fahrzeugeinstellung zu ermitteln und einen die relevante Fahrzeugeinstellung betreffenden Hinweis (A3) durch ein Ausgabemittel (50) des Fahrzeugs auszugeben und/oder die relevante Fahrzeugeinstellung automatisch anzupassen.

## Claims

1. Method of a vehicle (1) for detecting surroundings in traffic situations where there is restricted passage geometry (60), the method comprising the steps of:
- detecting (S1), by means of at least one sensor (11, 12, 13), at least one sensor value regarding a vehicle environment;
- identifying (S2) a restricted passage geometry (60) on the basis of the at least one sensor value;
- determining (S3) a position (64) of the restricted passage geometry (60) and an extent (61) of the restricted passage geometry (60) on the basis of the at least one sensor value;
- determining at least one further vehicle (1b) having dimensions exceeding the determined extent (61) and/or a route leading to the position (64) of the restricted passage geometry (60);
- generating (S4) a message relating to the determined extent (61) and position (64) of the restricted passage geometry (60) for output by the at least one further vehicle (1b); and
- transmitting (S5) the message to the at least one further vehicle (1b), a server and/or a roadside unit (53).

2. Method according to claim 1, wherein the determination (S3) of the extent (61) comprises determining a maximum passage height (63), a maximum passage width (62), and/or a three-dimensional travel corridor on the basis of the at least one sensor value.

3. Method of a vehicle (1) for vehicle control in traffic situations where there is restricted passage geometry (60), the method comprising the steps of:
- sending a message containing information regarding dimensions and a route of the vehicle to a further vehicle for determining if an extent of a restricted passage geometry is exceeded by the dimensions and/or determining a guidance of the route to the position of the restricted passage geometry;
- receiving (S6) a message containing the position (64) and extent (61) of the restricted passage geometry (60) from the further vehicle (1a);
- comparing (S7) the extent (61) of the restricted passage geometry (60) with the dimensions of the vehicle (1); and
- generating and outputting (S8) a communication (A1, A2, A3) by means of an output means (50) of the vehicle (1) on the basis of the comparison.

4. Method according to claim 3, further comprising:
- comparing the position (64) of the restricted passage geometry (60) with a current route of the vehicle (1); and
- on the basis of the comparison, adapting the route; and/or
- determining current dimensions of the vehicle (1) by means of the vehicle (1).

5. Method according to claim 4, further comprising:
- determining at least one vehicle setting relevant to the current dimensions of the vehicle (1); and
- outputting an indication (A3) relating to the relevant vehicle setting by means of an output means (50) of the vehicle (1); and/or
- automatically adapting the relevant vehicle setting by means of the vehicle (1).

6. Method according to either claim 4 or claim 5, further comprising:
- determining current dimensions of the vehicle (1) by determining at least one attachment located on the vehicle (1); and
- retrieving the dimensions of the at least one attachment from a network server and/or at least one attachment.

7. Vehicle (1) comprising:
- a communication module (30) designed to receive a message relating to the position (64) and extent (61) of a restricted passage geometry (60), and to send a message relating to the dimensions and route of the vehicle for determining if the extent of the restricted passage geometry is exceeded by the dimensions and/or determining a guidance of a route of the vehicle to the position of the restricted passage geometry;
- a control unit (40) designed to determine dimensions of the vehicle (1) for comparing the dimensions of the vehicle (1) with the extent (61) of the restricted passage geometry (60) and for determining a communication (A1, A2, A3) on the basis of the comparison; and
- an output means (50) designed to output the communication (A1, A2, A3).

8. Vehicle (1) according to claim 7, further comprising:
- at least one sensor (11, 12, 13) designed to detect at least one sensor value regarding a vehicle environment;
- wherein the control unit (40) is further designed to identify the restricted passage geometry (60) on the basis of the at least one sensor value, to determine the extent (61) of the restricted passage geometry (60) on the basis of the at least one sensor value, and to determine a position (64) of the restricted passage geometry (60), and
- wherein the communication module (30) is further designed to transmit a message relating to the extent (61) and position (64) of the restricted passage geometry (60) to a further vehicle (1b), a server and/or a roadside unit.

9. Vehicle (1) according to either claim 7 or claim 8, wherein the control unit (40) is further designed to determine at least one vehicle setting relevant to the current dimensions of the vehicle (1), and to output an indication (A3) relating to the relevant vehicle setting by means of an output means (50) of the vehicle, and/or to automatically adapt the relevant vehicle setting.

## Revendications

1. Procédé d'un véhicule (1) pour la détection de l'environnement dans des situations de circulation avec une géométrie de passage restreinte (60), le procédé présentant les étapes :
- de détection (S1), à l'aide d'au moins un capteur (11, 12, 13), d'au moins une valeur de capteur concernant un environnement de véhicule ;
- de reconnaissance (S2) d'une géométrie de passage restreinte (60) à l'aide de l'au moins une valeur de capteur ;
- de détermination (S3) d'une position (64) de la géométrie de passage restreinte (60) et d'une extension (61) de la géométrie de passage restreinte (60) sur la base de l'au moins une valeur de capteur ;
- de détermination d'au moins un autre véhicule (1b) avec des dimensions dépassant l'extension déterminée (61) et/ou un itinéraire menant à la position (64) de la géométrie de passage restreinte (60) ;
- de création (S4) d'un message concernant l'extension (61) et la position (64) déterminées de la géométrie de passage restreinte (60) pour l'émission par l'au moins un autre véhicule (1b) ; et
- de transmission (S5) du message à l'au moins un autre véhicule (1b), un serveur et/ou une unité de bord de route (53).

2. Procédé selon la revendication 1, dans lequel la détermination (S3) de l'extension (61) comprend une détermination d'une hauteur de passage maximale (63), d'une largeur de passage maximale (62) et/ou d'un couloir de circulation tridimensionnel à l'aide de l'au moins une valeur de capteur.

3. Procédé d'un véhicule (1) pour la commande de véhicule dans des situations de circulation avec une géométrie de passage restreinte (60), le procédé présentant les étapes :
- d'envoi d'un message contenant des informations sur les dimensions et un itinéraire du véhicule à un autre véhicule pour la détermination d'un dépassement par les dimensions d'une extension d'une géométrie de passage restreinte et/ou un guidage de l'itinéraire vers la position de la géométrie de passage restreinte ;
- de réception (S6) d'un message contenant la position (64) et l'extension (61) de la géométrie de passage restreinte (60) en provenance de l'autre véhicule (1a) ;
- de comparaison (S7) de l'extension (61) de la géométrie de passage restreinte (60) aux dimensions du véhicule (1) ; et
- de création et d'émission (S8) d'une communication (A1, A2, A3) par l'intermédiaire d'un moyen d'émission (50) du véhicule (1) sur la base de la comparaison.

4. Procédé selon la revendication 3, présentant en outre :
- la comparaison de la position (64) de la géométrie de passage restreinte (60) à l'itinéraire réel du véhicule (1) ; et
- sur la base de la comparaison, l'adaptation de l'itinéraire ; et/ou
- la détermination de dimensions réelles du véhicule (1) par le véhicule (1).

5. Procédé selon la revendication 4, présentant en outre :
- la détermination d'au moins un réglage de véhicule pertinent pour les dimensions réelles du véhicule (1) ; et
- l'émission d'un avis (A3) concernant le réglage de véhicule pertinent par l'intermédiaire d'un moyen d'émission (50) du véhicule (1) ; et/ou
- l'adaptation automatique du réglage de véhicule pertinent par l'intermédiaire du véhicule (1).

6. Procédé selon la revendication 4 ou 5, présentant en outre :
- la détermination de dimensions réelles du véhicule (1) par la détermination d'au moins une pièce de montage se trouvant sur le véhicule (1) ; et
- la récupération des dimensions de l'au moins une pièce de montage depuis un serveur de réseau et/ou au moins une pièce de montage.

7. Véhicule (1), présentant :
- un module de communication (30) conçu pour la réception d'un message concernant la position (64) et l'extension (61) d'une géométrie de passage restreinte (60) et pour l'envoi d'un message concernant les dimensions et l'itinéraire du véhicule pour la détermination d'un dépassement, par les dimensions, de l'extension de la géométrie de passage restreinte et/ou un guidage d'un itinéraire du véhicule vers la position de la géométrie de passage restreinte ;
- une unité de commande (40) conçue pour la détermination de dimensions du véhicule (1), pour la comparaison des dimensions du véhicule (1) à l'extension (61) de la géométrie de passage restreinte (60) et pour la détermination d'une communication (A1, A2, A3) sur la base de la comparaison ; et
- un moyen d'émission (50) conçu pour l'émission de la communication (A1, A2, A3).

8. Véhicule (1) selon la revendication 7, présentant en outre :
- au moins un capteur (11, 12, 13) conçu pour la détection d'au moins une valeur de capteur concernant un environnement de véhicule ;
- dans lequel l'unité de commande (40) est en outre conçue pour reconnaître la géométrie de passage restreinte (60) à l'aide de l'au moins une valeur de capteur, déterminer l'extension (61) de la géométrie de passage restreinte (60) à l'aide de l'au moins une valeur de capteur et déterminer une position (64) de la géométrie de passage restreinte (60) et
- dans lequel le module de communication (30) est en outre conçu pour transmettre un message concernant l'extension (61) et la position (64) de la géométrie de passage restreinte (60) à un autre véhicule (1b), un serveur et/ou une unité de bord de route.

9. Véhicule (1) selon l'une des revendications 7 ou 8, dans lequel l'unité de commande (40) est en outre conçue pour déterminer au moins un réglage de véhicule pertinent pour les dimensions réelles du véhicule (1) et émettre un avis (A3) concernant le réglage de véhicule pertinent par l'intermédiaire d'un moyen d'émission (50) du véhicule et/ou adapter automatiquement le réglage de véhicule pertinent.
